# EUROPEAN PATENT APPLICATION

(11) **EP 2 058 738 A1**
(43) Date of publication of application: **13.05.2009**
(21) Application number: 07806065.4
(22) Date of filing: 24.08.2007
(51) Int. Cl.: G06F 13/00, G06F 12/00

(54) **DATABASE SYNCHRONIZATION SYSTEM AND DATABASE SYNCHRONIZATION METHOD**

(30) Priority: 31.08.2006 JP 2006235759
(71) Applicant: NTT DoCoMo, Inc., Chiyoda-ku Tokyo 100-6150 (JP)
(72) Inventor: SATOU, Tetsuo, Chiyoda-ku Tokyo 100-6150 (JP); KIKUCHI, Daisuke, Chiyoda-ku Tokyo 100-6150 (JP)
(74) Representative: Schwabe - Sandmair - Marx
(86) International application number: PCT/JP2007/066479
(87) International publication number: WO 2008/026521

(57) **Abstract**

A database synchronization system and database synchronization method for acquiring database synchronization between a terminal apparatus and a server apparatus while reducing user's operation load. A mobile communication network server (3) judges the degree of importance of an information element targeted for synchronization, and transmits a synchronization start notification to a mobile terminal (1) corresponding to the judgment result, and database synchronization is performed between the mobile communication network server (3) and mobile terminal (1) after the synchronization start notification. Alternately, the mobile communication network server (3) determines timing of update of the information element, and transmits a synchronization start notification to the mobile terminal (1) corresponding to the determination, and database synchronization is performed between the mobile communication network server (3) and mobile terminal (1) after the synchronization start notification. Then, the mobile terminal (1) receiving the synchronization start notification performs various kinds of representation corresponding to information about the information element included in the synchronization start notification.

## Description

### Technical Field

The present invention relates to a database synchronization system and database synchronization method, and more particularly, to a database synchronization system and database synchronization method using incoming call notification.

### Background Art

A database on the host side and another database on the client side first have the same data, but as the databases are used separately, the data in the databases differs from each other. In other words, data that is added, modified and/or deleted in one of the databases and data that is added, modified and/or deleted in the other database exists in both the databases separately. In such a case, the data that is added, modified and/or deleted in one of the databases is reflected in the other database to make the databases same, and the processing is called database synchronization.

Conventionally, it has been known that database synchronization is performed between a server apparatus and a terminal apparatus, and such a technique is disclosed that an area to back up data of the terminal apparatus is reserved in memory of the server apparatus, and that synchronization is acquired between the database stored in the terminal apparatus and the database stored in the server apparatus when necessary.
[Patent Document 1] Japanese Laid-Open Patent Publication No.2005-38030

### Disclosure of Invention

When synchronization is acquired between the database of the terminal apparatus and the database of the server apparatus, in order to prevent data on the terminal apparatus side from being lost accidentally, the server apparatus generally notifies the terminal apparatus of data being updated, and starts synchronization processing after receiving approval of a user of the terminal apparatus.

However, the method of obtaining approval of a user in database synchronization requires the user to operate the terminal whenever synchronizing the databases, and has the problem that the operation is significantly burdensome.

It is an object of the present invention to provide a database synchronization system and database synchronization method enabling database synchronization to be performed between a terminal apparatus and a server apparatus while reducing user's operation load.

The inventors of the present invention noted an information element that is a subject of synchronization or subject of update in database synchronization and update timing of the information element, conceived the case of eliminating the need for a synchronization start notification in the information element or update timing, found out that user's load of operation such as confirmation operation is reduced by eliminating the synchronization start notification corresponding to the information element or update timing, and reached the invention.

In other words, it is a gist of the invention that a server judges the degree of importance of an information element targeted for synchronization, or determines update timing of the information element, and gives a synchronization start notification to a user terminal corresponding to the judgment result or determination, synchronization of the information element is performed between the server and user terminal after the synchronization start notification, and that database synchronization is thereby achieved between the terminal apparatus and server apparatus while reducing user's operation load.

A database synchronization system of the invention is a database synchronization system in which synchronization of an information element is performed between a server and a user terminal, where the server has judging means for judging the degree of importance of an information element targeted for synchronization, and notifying means for giving a synchronization start notification to the user terminal corresponding to a judgment result of the judging means.

According to this configuration, transmission of the synchronization start notification is determined corresponding to the degree of importance of the information element, and the synchronization start notification is made corresponding to the degree of importance to obtain consent. Therefore, it is possible to prevent the data from being lost accidentally, corresponding to the degree of importance. Further, the synchronization start notification is not transmitted on all database synchronization. Therefore, users do not need to perform confirmation operation on all database synchronization, and it is possible to reduce user's operation load.

In the database synchronization system of the invention, the notifying means preferably gives the synchronization start notification only in the case that the degree of importance of the information element is relatively high.

A database synchronization system of the invention is a database synchronization system in which synchronization of an information element is performed between a server and a user terminal, where the server has determining means for determining timing of updating an information element, and notifying means for giving a synchronization start notification to the user terminal corresponding to a determination of the determining means.

According to this configuration, transmission of the synchronization start notification is determined corresponding to the timing (setting of automatic synchronization) of updating the information element, and the synchronization start notification is made in the case of automatic synchronization to obtain consent. Therefore, it is possible to prevent the data from being lost accidentally in the case of automatic synchronization. Further, the synchronization start notification is not transmitted on all database synchronization. Therefore, users do not need to perform confirmation operation on all database synchronization, and it is possible to reduce user's operation load.

In the database synchronization system of the invention, the server preferably has setting means for making a setting for automatically performing the synchronization in response to a request from the terminal.

In the database synchronization system of the invention, the user terminal preferably performs different representation corresponding to the synchronization start notification. According to this constitution, the user is capable of recognizing what the information element targeted for synchronization or update in database synchronization is, the degree of importance of the information element, update timing and the like by the representation in the mobile terminal.

In the database synchronization system of the invention, the server and the user terminal preferably have an application for database synchronization.

A database synchronization method of the invention is a database synchronization method in which synchronization of an information element is performed between a server and a user terminal, and has in the server a judging step of judging the degree of importance of an information element targeted for synchronization, a notifying step of giving a synchronization start notification to the user terminal corresponding to a judgment result in the judging step, and a synchronizing step of synchronizing the information element between the server and the user terminal after the synchronization start notification.

According to this method, transmission of the synchronization start notification is determined corresponding to the degree of importance of the information element, and the synchronization start notification is made on the high degree of importance to obtain consent. Therefore, it is possible to prevent the data with the high degree of importance from being lost accidentally. Further, the synchronization start notification is not transmitted on all database synchronization. Therefore, users do not need to perform confirmation operation on all database synchronization, and it is possible to reduce user's operation load.

In the database synchronization method of the invention, it is preferable in the notifying step that the synchronization start notification is given only in the case that the degree of importance of the information element is relatively high.

A database synchronization method of the invention is a database synchronization method in which synchronization of an information element is performed between a server and a user terminal, and has in the server a determining step of determining timing of updating an information element, a notifying step of giving a synchronization start notification to the user terminal corresponding to a determination in the determining step, and a synchronizing step of synchronizing the information element between the server and the user terminal after the synchronization start notification.

According to this method, transmission of the synchronization start notification is determined corresponding to the timing (setting of automatic synchronization) of updating the information element, and the synchronization start notification is made in the case of automatic synchronization to obtain consent. Therefore, it is possible to prevent the data from being lost accidentally in the case of automatic synchronization. Further, the synchronization start notification is not transmitted on all database synchronization. Therefore, users do not need to perform confirmation operation on all database synchronization, and it is possible to reduce user's operation load.

In the database synchronization method of the invention, the user terminal is preferably provided with a transmitting step of transmitting a confirmation signal of database synchronization to the server after receiving the synchronization start notification. According to this method, it is possible to obtain user's consent to database synchronization.

In the database synchronization method of the invention, the server is preferably provided with a setting step of making a setting for automatically performing the synchronization in response to a request from the terminal.

In the database synchronization method of the invention, the user terminal preferably performs different representation corresponding to the synchronization start notification. According to this method, the user is capable of recognizing what the information element targeted for synchronization or update in database synchronization is, the degree of importance of the information element, update timing and the like by representation in the mobile terminal.

### Brief Description of Drawings

FIG.1 is a diagram showing a schematic configuration of a database synchronization system according to one embodiment of the invention;
FIG.2 is a schematic block diagram showing a mobile terminal 1 used in the database synchronization system according to one embodiment of the invention;
FIG.3 is a schematic block diagram showing a mobile communication network server 3 used in the database synchronization system according to one embodiment of the invention;
FIG.4 is a diagram showing a table included in a deciding section of the mobile terminal in the database synchronization system according to one embodiment of the invention;
FIG.5 is a diagram showing a table included in a user DB of the mobile communication network server in the database synchronization system according to one embodiment of the invention;
FIG.6 is a diagram showing a table included in a judging section of the mobile communication network server in the database synchronization system according to one embodiment of the invention;
FIG.7 is a diagram showing a data format of a synchronization start notification used in the database synchronization system according to one embodiment of the invention;
FIG.8 is a sequence diagram showing an example of a database synchronization method according to one embodiment of the invention; and
FIG.9 is a sequence diagram showing another example of the database synchronization method according to one embodiment of the invention.

### Best Mode for Carrying Out the Invention

An embodiment of the invention will specifically be described below with reference to accompanying drawings.

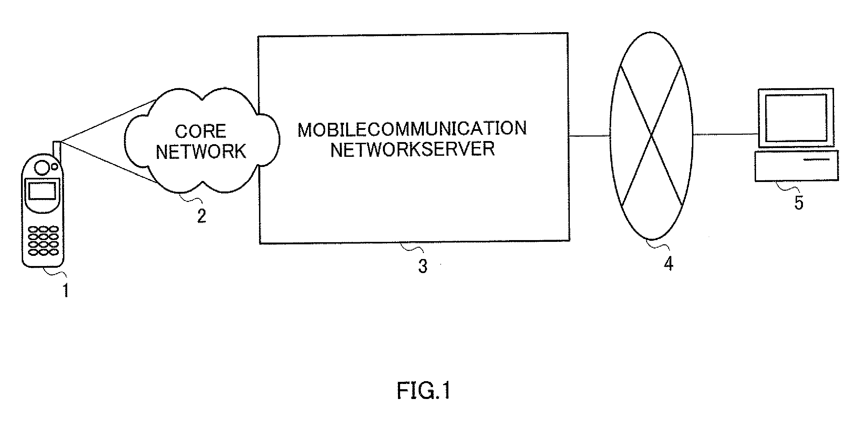

FIG.1 is a diagram showing a schematic configuration of a database synchronization system according to one embodiment of the invention. The system as shown in FIG.1 is mainly comprised of a mobile terminal 1 that is a user terminal, a mobile communication network server 3 connected to the mobile terminal 1 via a core network 2 that is a mobile communication network, another terminal apparatus such as, for example, a personal computer (PC) 5 connected to the mobile terminal 1 via a network such as the internet 4, and the like. In the system having such a configuration, database synchronization is performed that data which is added, modified and/or deleted in a database of the mobile communication network server 3 is reflected (data update) in a database of the mobile terminal 1 to make both the databases same. In this case, the mobile communication network server 3 beforehand gives a synchronization start notification to the mobile terminal 1 corresponding to the degree of importance of an information element targeted for data update, or update timing of the information element, and the mobile terminal 1 performs representation based on descriptions of the synchronization start notification.

Herein, the information element is elements of information managed in the database, and for example, includes an address book, image file, moving-picture file, mail, music file, bookmark, schedule and the like. Further, the update timing is timing at which an information element is updated, for example, added, modified, or deleted, and for example, includes the case that the information element is updated by another terminal, the case that the information element is automatically updated on a predetermined time basis and the like. Further, the degree of importance of the information element is a level of importance to the user and server side. Accordingly, the information element with the high degree of importance is information elements that cannot be deleted accidentally, and for example, includes an address book, image file, moving-picture file, mail, music file, bookmark, schedule and the like. Further, the information element with the high degree of importance is not only an information element with the highest degree of importance, and includes at least one information element that cannot be deleted on the user and server side.

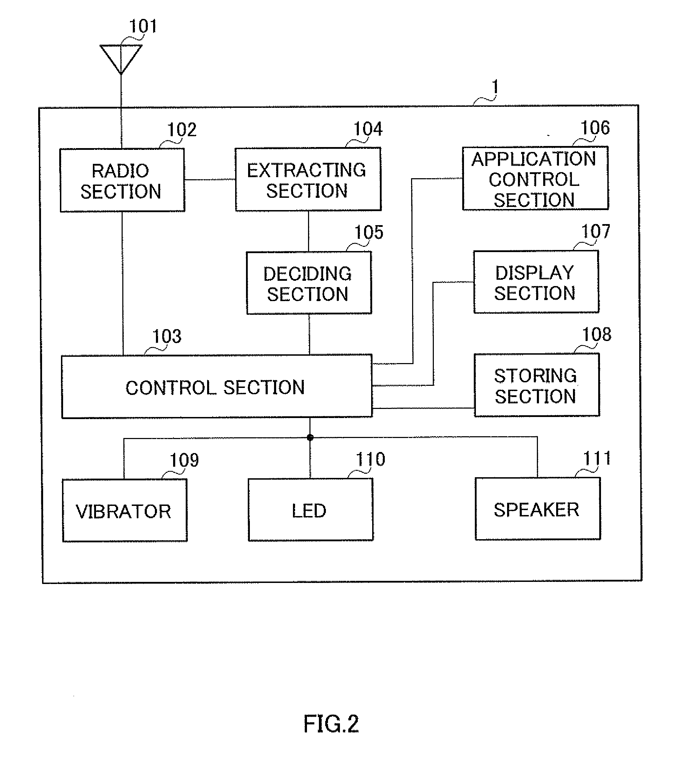

FIG.2 is a schematic block diagram showing the mobile terminal 1 used in the database synchronization system according to one embodiment of the invention. The mobile terminal 1 is mainly comprised of an antenna 101, radio section 102 that performs radio processing on a signal received via the antenna 101, control section 103 that controls the entire terminal, extracting section 104 that extracts predetermined information, herein, information (the degree of importance, update timing) about the information element targeted for data update from the signal (synchronization start notification) subjected to the radio processing, deciding section 105 that decides on representation performed in the mobile terminal 1, i.e. various kinds of behavior such as, for example, vibration, sound, lighting and the like performed in the mobile terminal 1, based on the extracted information, application control section 106 that operates applications, display section 107 that performs various kinds of display, storing section 108 that stores various kinds of information including the information element and data, vibrator 109 that vibrates the terminal, LED 110 that is a light-emitting device for lighting, and speaker 111 that outputs various sounds including voice.

The radio section 102 performs predetermined radio processing on a signal with the radio frequency received via the antenna 101 to down-convert to an intermediate-frequency signal or baseband signal, while up-converting an intermediate-frequency or baseband signal to transmit via the antenna 101. The down-converted signal (received signal) is output to the extracting section 104 and control section 103.

The extracting section 104 extracts from the received signal information about the information element such as, for example, a type and the degree of importance of the information element, update timing of the information element or the like included in a synchronization start notification transmitted from the mobile communication network server 3. The information extracted in the extracting section 104 is output to the deciding section 105.

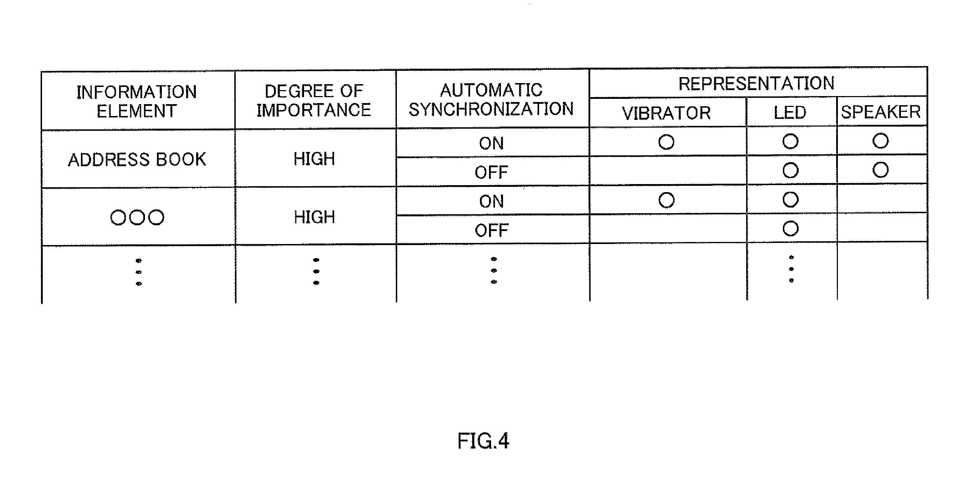

The deciding section 105 makes a decision on representation to be performed in the mobile terminal 1 based on the information about the information element. The deciding section 105 has a table as shown in FIG.4. The table as shown in FIG.4 associates the type of information element, the degree of importance of the information element, and update timing (for example, automatic synchronization or not) with representation in the mobile terminal 1. For example, in the case that the information element is an address book, the degree of importance is high, and when update is performed in automatic synchronization, the representation mode is vibration of the vibrator, emission of the LED and sounding from the mike. Meanwhile, when update is not performed in automatic synchronization, the representation mode is emission of the LED and sounding from the mike. In addition, items of the table as shown in FIG.4 are not limited thereto, and the table is required to associate at least items about the information element and update timing with representation in the mobile terminal 1. The information decided in the deciding section 105 i.e. the decision result (representation mode) obtained using the table as shown in FIG.4 is output to the control section 103.

The control section 103 performs various kinds of processing on the received signal subjected to the radio processing in the radio section 102. For example, the control section 103 stores predetermined information in the storing section 108, outputs the received signal from speaker 111 as speech information, or outputs the received signal to the display section 107 as image information or textual information. Moreover, the control section 103 controls the entire mobile terminal 1. Upon receiving a decision result from the deciding section 105, the control section 103 performs representation based on the decision result. In other words, according to a representation mode in the decision result, the control section 103 performs representation using components in the mobile terminal 1. More specifically, the control section 103 performs various kinds of representation corresponding to the information element, using the vibrator 109 that vibrates the mobile terminal 1, LED 110 that emits predetermined light, and speaker 111 that outputs (sounds) sound and speech. In this way, in the mobile terminal 1, different representation is performed corresponding to the synchronization start notification transmitted from the mobile communication network server 3. Thus, by performing different representation corresponding to synchronization start notification transmitted from the mobile communication network server 3, the user is capable of recognizing what the information element targeted for synchronization or update in database synchronization is the degree of importance of the information element, update timing and the like by the representation in the mobile terminal 1.

Further, when the control section 103 receives a synchronization start notification from the mobile communication network server 3, the control section 103 displays a screen in the display section 107 to obtain consent to start synchronization. When the user consents to start synchronization on the screen, a signal indicative of consent is output to the control section 103, and the control section 103 outputs a confirmation signal on database synchronization to the mobile communication network server 3 via the radio section 102.

The application control section 106 executes an application program created in application language (for example, Java (registered trademark) language) corresponding to directions of the control section 103. Upon receiving a control signal indicative of the confirmation signal being transmitted to the mobile communication network server 3 from the control section 103, the application control section 106 performs database synchronization processing. In other words, the application section 106 executes an application program for database synchronization. Further, the display section 107 displays a variety of images and characters corresponding to directions of the control section 103. Furthermore, the storing section 108 stores various kinds of information, data and applications. The storing section 108 is comprised of, for example, ROM, RAM, hard disk or the like.

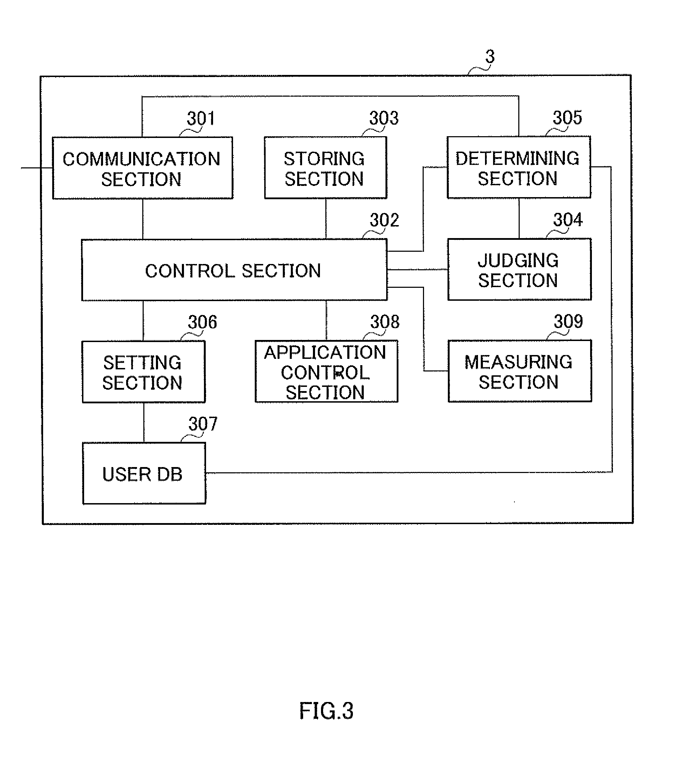

FIG.3 is a schematic block diagram showing the mobile communication network server 3 used in the database synchronization system according to one embodiment of the invention. The mobile communication network server 3 is mainly comprised of a communication section 301 that performs radio communication and cable communication, control section 302 that controls the entire server, storing section 303 that stores various kinds of information and data including the information element that is a subject of synchronization or a subject of update, judging section 304 that judges the degree of importance of the information element, determining section 305 that determines whether or not a synchronization start notification is made corresponding to the degree of importance of the information element or update timing of the information element, setting section 306 that makes a setting for automatically performing synchronization in response to a request from the terminal, user database (DB) 307 including user data associating at least the setting with a user, application control section 308 that operates applications, and measuring section 309 that measures time in automatically performing synchronization.

The communication section 301 receives a signal including an information element from the terminal (for example, PC5), while transmitting a notification including information about the information element such as the degree of importance of the information element, update timing and the like to the mobile terminal 1. Further, the communication section 301 communicates with the mobile terminal 1 in database synchronization. The signal including the information element from the terminal is output to the control section 302, and the synchronization start notification including the information about the information element is output from the determining section 305.

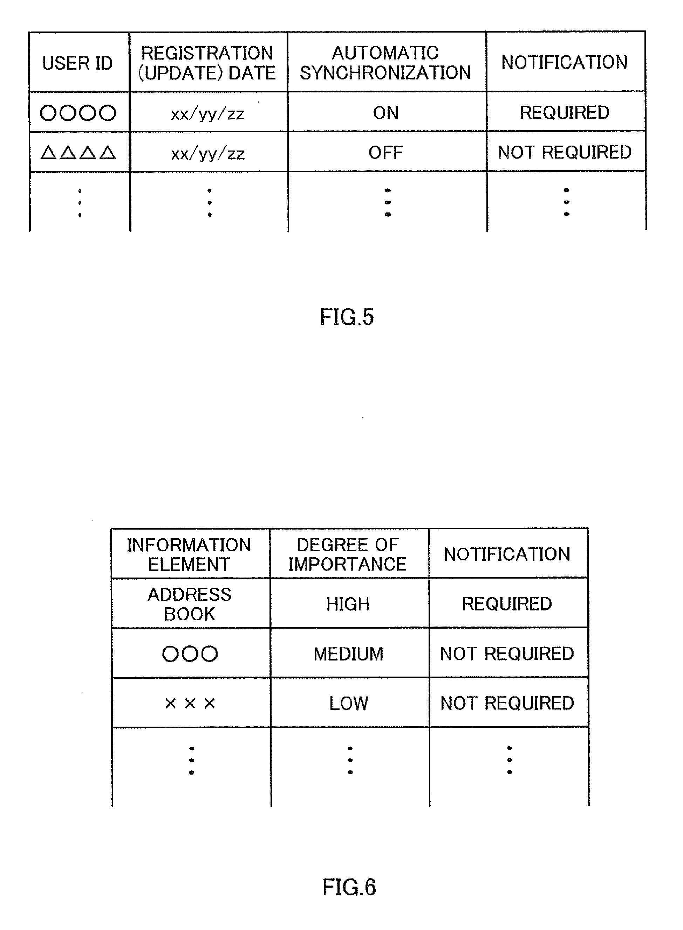

The judging section 304 judges the degree of importance of an information element. The judging section 304 has a table as shown in FIG.6. The table as shown in FIG.6 associates the type of information element and the degree of importance of the information element with whether or not to give a synchronization start notification to the mobile terminal 1 (the presence or absence of notification). For example, when the information element is an address book, since the degree of importance is relatively high, the synchronization start notification is given to the mobile terminal 1. Meanwhile, in the case of the other elements (information elements ○○○, xxx in the figure), the degree of importance is not high, and the notification is not given to the mobile terminal 1. In addition, items of the table as shown in FIG.6 are not limited thereto, and the table is required to associate at least the type of information element and the degree of importance of the information element with the presence or absence of a synchronization start notification to the mobile terminal 1. Accordingly, the judging section 304 makes a judgment on whether or not to give a synchronization start notification to the mobile terminal 1 corresponding to the degree of importance of the information element, referring to the table as shown in FIG.6. In addition, herein, the case is described that a synchronization start notification is given to the mobile terminal 1 only on the information element with the degree of importance being relatively high, but in the invention, conditions for giving a synchronization start notification to the mobile terminal 1 may be modified as appropriate.

The setting section 306 makes a setting for automatically performing synchronization in response to a request from the terminal. The setting (automatic synchronization) of whether or not to automatically perform synchronization can be made from a terminal, i.e. mobile terminal 1 that is a user terminal or another terminal such as the PC5. When the mobile terminal 1 makes the setting for automatic synchronization, the mobile terminal 1 transmits a setting request to the setting section 306 of the mobile communication network server 3 via the core network 2. Meanwhile, when another terminal such as the PC 5 makes the setting for automatic synchronization, the PC 5 transmits a setting request to the setting section 306 of the mobile communication network server 3 via the internet 4. Upon receiving the setting request, the setting section 306 registers the request with the user database (user DB) 307.

The user DB 307 has a table as shown in FIG.5. The table as shown in FIG.5 associates user information (for example, user ID), registration date (update date), setting for automatic synchronization, and the presence or absence of a synchronization start notification with one another. For example, with respect to a user with user ID of ○○○○, automatic synchronization is ON, and update is automatically performed by database synchronization. With respect to a user with user ID of xxxx, automatic synchronization is OFF, and database synchronization is performed by update from another terminal.

In the case of automatic synchronization being ON, i.e. in the case that database synchronization is performed automatically at regular time intervals, the information element is updated under the initiative of the mobile communication network server without the user having concern, and the need to check with the user is high. Therefore, in this case, a synchronization start notification is transmitted to the mobile terminal 1. Meanwhile, in the case that the user operates another terminal to update the information element, the user is capable of checking update with the terminal (under the initiative of user), and the need to check with the user is low. Therefore, in this case, a synchronization start notification is not transmitted to the mobile terminal 1.

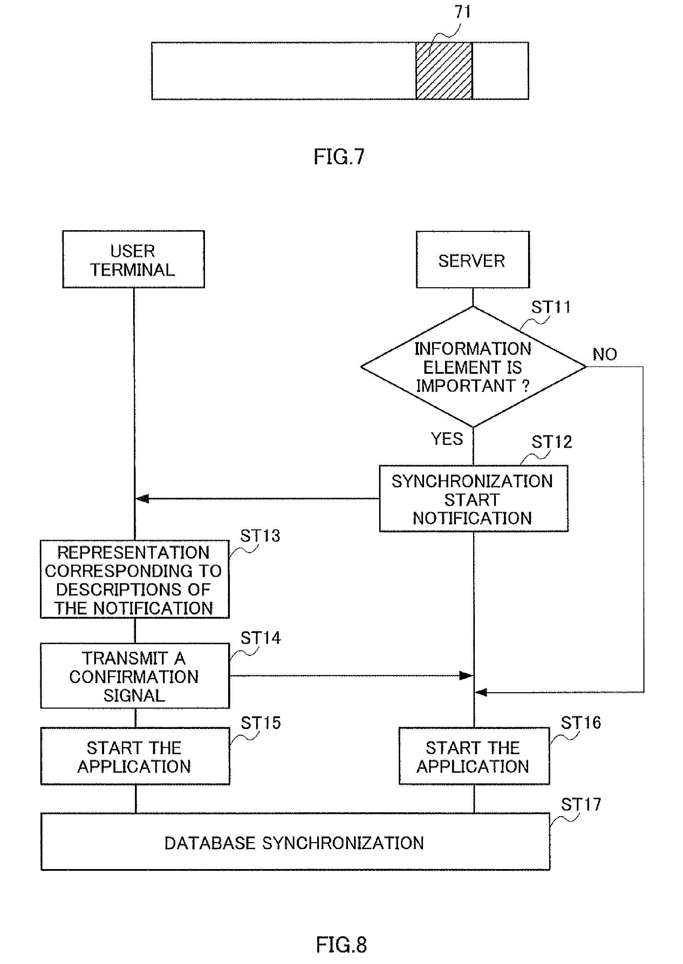

In addition, in the embodiment, the case is described that a synchronization start notification is transmitted when automatic synchronization is set, and that a synchronization start notification is not transmitted when automatic synchronization is not set. In the invention, however, a synchronization start notification may be made irrespective of ON/OFF of automatic synchronization, and include information of ON/OFF of automatic synchronization. For example, the information of ON/OFF of automatic synchronization may be included in an area 71 of the information about the information element in a data format as shown in FIG.7. Thus, by transmitting a synchronization start notification including the information about automatic synchronization to the mobile terminal 1, the mobile terminal 1 is capable of performing representation corresponding to the setting of automatic synchronization. Further, items of the table as shown in FIG.5 are not limited thereto, and the table is required to associate at least user information (for example, user ID) with the setting of automatic synchronization.

The determining section 305 determines whether or not to make a synchronization start notification corresponding to the degree of importance of the information element, or update timing of the information element. When whether or not to make a synchronization start notification is determined corresponding to the degree of importance of the information element, the determining section 305 determines whether or not to make a synchronization start notification based on a judgment result from the judging section 304 i.e. the information of whether a synchronization start notification is required, referring to the table as shown in FIG.6. For example, the information element is an address book, since the degree of importance is high, the determining section 305 determines to make a synchronization start notification. Further, the determining section 305 extracts information of the information element from the table as shown in FIG.6 to include in a synchronization start notification. For example, the information (the type and degree of importance of the information element) of the information element is included in the area 71 for the information about the information element in the data format as shown in FIG.7. Thus, by transmitting a synchronization start notification including the information about the information element to mobile terminal 1, the mobile terminal 1 is capable of performing representation corresponding to the type and degree of importance of the information element.

When whether or not to make a synchronization start notification is determined corresponding to update timing of the information element i.e. whether the setting is automatic synchronization or not, the determining section 305 determines whether or not to make a synchronization start notification based on the information of whether a synchronization start notification is required, referring to the table of the user DB 307 as shown in FIG.5. Since it is required to give a synchronization start notification to a user set for automatic synchronization, the determining section 305 extracts all users set for automatic synchronization from the user DB 307, and determines to transmit a synchronization start notification to the users. The communication section 301 transmits thus determined synchronization start notification to the mobile terminal 1.

The measuring section 309 measures the time when database synchronization is automatically performed. For example, the measuring section 309 is comprised of a timer. The measuring section 309 measures the time required for a synchronization start notification to be made next after being made last. The measurement information is output to the control section 302, and the determining section 305 outputs a synchronization start notification based on the measurement information.

The application control section 308 executes an application program created in application language (for example, Java (registered trademark) language) corresponding to directions of the control section 302. When a confirmation signal is received from the mobile terminal 1 and the application control section 308 receives a control signal indicative of the reception from the control section 302, the section 308 performs database synchronization processing. In other words, the section 308 executes an application program for database synchronization. Further, in the case of automatic synchronization, the control section 302 outputs a control signal to the application control section 308 based on the measurement information from the measuring section 309. The application control section 308 performs the database synchronization processing according to the control signal. In other words, the section 308 executes the application program for database synchronization. Further, the storing section 303 stores various kinds of information elements, data and applications.

In the database synchronization system having the above-mentioned configuration, the mobile communication network server 3 judges the degree of importance of the information element targeted for synchronization, and transmits a synchronization start notification to the mobile terminal 1 corresponding to the judgment result, and after the synchronization start notification is made, database synchronization is performed between the mobile communication network server 3 and mobile terminal 1. More specifically, when the degree of importance of the information element is high, the synchronization start notification is made. Alternately, the mobile communication network server 3 determines timing of update of the information element, and transmits a synchronization start notification to the mobile terminal 1 corresponding to the determination, and after the synchronization start notification is made, database synchronization is performed between the mobile communication network server 3 and mobile terminal 1. More specifically, when the timing of update of the information element is automatic synchronization, the synchronization start notification is made. Then, the mobile terminal 1 receiving the synchronization start notification performs various kinds of representation corresponding to the information (the type and degree of importance of the information element, timing of update of the information element) about the information element included in the synchronization start notification.

In such database synchronization system and method, information elements are classified into levels, transmission of a synchronization start notification is determined corresponding to the level, and the synchronization start notification is made on the information elements of the high level to obtain consent. Therefore, it is possible to prevent the data of the high level from being lost accidentally. Further, the synchronization start notification is not transmitted on all database synchronization. Therefore, users do not need to perform confirmation operation on all database synchronization, and it is possible to reduce user's operation load. Similarly, information elements are classified into levels in timing of update (setting of automatic synchronization), transmission of a synchronization start notification is determined corresponding to the level, and in the case of automatic synchronization, the synchronization start notification is made to obtain consent. Therefore, it is possible to prevent the data from being lost accidentally in the case of automatic synchronization. Further, the synchronization start notification is not transmitted on all database synchronization. Therefore, users do not need to perform confirmation operation on all database synchronization, and it is possible to reduce user's operation load.

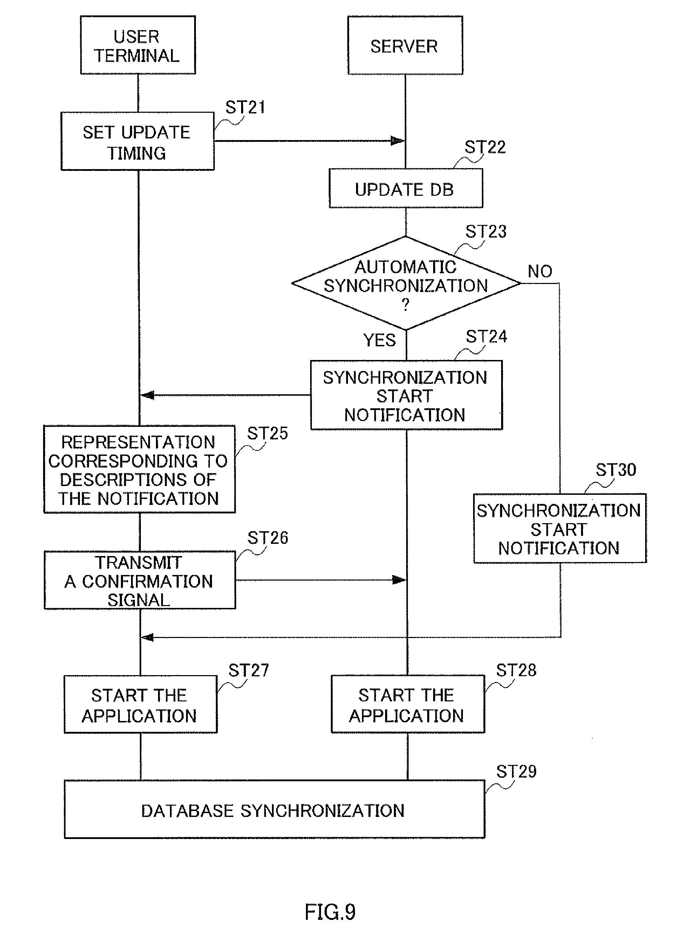

The database synchronization method of the invention will be described below with reference to FIGs.8 and 9. FIG.8 is a sequence diagram showing an example of the database synchronization method according to one embodiment of the invention. The sequence as shown in FIG.8 is a sequence when the mobile communication network server 3 judges the degree of importance of an information element targeted for synchronization, and transmits a synchronization start notification to the mobile terminal 1 corresponding to the judgment result, and after the synchronization start notification is made, database synchronization is performed between the mobile communication network server 3 and mobile terminal 1.

First, when data of an information element is updated in the mobile communication network server 3, the server 3 judges whether the information element is important (ST11). The degree of importance of the information element is beforehand determined. Further, the data may be updated in the mobile communication network server 3, or from another terminal. When the information element is important, the judging section 304 judges that a synchronization start notification is required, based on the table as shown in FIG.6, the determining section 305 determines to transmit the synchronization start notification, and the communication section 301 transmits the synchronization start notification to the mobile terminal 1 (ST12).

Upon receiving the synchronization start notification from the mobile communication network server 3, the mobile terminal 1 performs representation corresponding to descriptions of the synchronization start notification (ST13). In other words, when the mobile terminal 1 receives the synchronization start notification, the extracting section 104 extracts data in the area 71 of the information about the information element in the data format, and the deciding section 105 performs representation based on the information about the information element i.e. referring to the table as shown in FIG.4. At this point, the control section 103 displays a screen to obtain consent to database synchronization in the display section 107.

When the user consents to database synchronization, the control section 103 transmits a confirmation signal to the mobile communication network server 3 via the communication section 102 (ST14), and outputs a control signal indicative of the confirmation signal being transmitted to the mobile communication network server 3 to the application control section 106. The application control section 106 starts the application for database synchronization according to the control signal (ST15). Meanwhile, in the mobile communication network server 3, when the confirmation signal is received from the mobile terminal 1, the control section 302 outputs a control signal indicative of the reception to the application control section 308. The application control section 308 starts the application for database synchronization according to the control signal (ST16). Thus, the application for database synchronization is started in the mobile terminal 1 and mobile communication network server 3, and the database synchronization processing is thereby performed.

Meanwhile, when the information element is not important, without the mobile communication network server 3 transmitting the synchronization start notification to the mobile terminal 1, the application control sections 106, 308 start the application for database synchronization (ST15, ST16). Thus, the application for database synchronization is started in the mobile terminal 1 and mobile communication network server 3, and the database synchronization processing is thereby performed (ST17). In addition, specific processing of database synchronization is described in "Heterogeneous database replication with SyncML" http://www-6.ibm.com/jp/developerworks/java/050210/j_j-sync4j.html, entire content of which is expressly incorporated by reference herein.

FIG.9 is a sequence diagram showing another example of the database synchronization method according to one embodiment of the invention. The sequence as shown in FIG.9 is a sequence when the mobile communication network server 3 determines timing of update of an information element, and transmits a synchronization start notification to the mobile terminal 1 corresponding to the determination result, and after the synchronization start notification is made, database synchronization is performed between the mobile communication network server 3 and mobile terminal 1.

First, the mobile terminal 1 sets update timing. In other words, the terminal 1 sets whether or not to acquire automatic synchronization (ST21). In addition, herein, whether or not to acquire automatic synchronization is set, but either condition (ON or OFF of automatic synchronization) is set as a default, and the setting may be made only in the case of setting a mode different from the default. Further, the setting of update timing may be made from another terminal. When the mobile terminal 1 transmits a setting request to the mobile communication network server 3, in the mobile communication network server 3 the setting section 306 updates the table of the user DB 307 according to the setting request (ST22).

Then, when data of an information element is updated in the mobile communication network server 3, the server 3 judges whether update timing of the information element is automatic synchronization i.e. ON of automatic synchronization (ST23). Further, the data may be updated in the mobile communication network server 3, or from another terminal. When the setting is automatic synchronization, the determining section 305 determines to transmit the synchronization start notification based on the table of the user DB 307 as shown in FIG.5, and the communication section 301 transmits the synchronization start notification to the mobile terminal 1 (ST24). The synchronization start notification is made on a predetermined time basis based on the measurement of the measuring section 309.

Upon receiving the synchronization start notification from the mobile communication network server 3, the mobile terminal 1 performs representation corresponding to descriptions of the synchronization start notification (ST25). In other words, when the mobile terminal 1 receives the synchronization start notification, the extracting section 104 extracts data in the area 71 of the information about the information element in the data format, and the deciding section 105 performs representation based on the information about the information element i.e. referring to the table as shown in FIG.4. At this point, the control section 103 displays a screen to obtain consent to database synchronization in the display section 107.

When the user consents to database synchronization, the control section 103 transmits a confirmation signal to the mobile communication network server 3 via the communication section 102 (ST26), and outputs a control signal indicative of the confirmation signal being transmitted to the mobile communication network server 3 to the application control section 106. The application control section 106 starts the application for database synchronization according to the control signal (ST27). Meanwhile, in the mobile communication network server 3, when the confirmation signal is received from the mobile terminal 1, the control section 302 outputs a control signal indicative of the reception to the application control section 308. The application control section 308 starts the application for database synchronization according to the control signal (ST28). Thus, the application for database synchronization is started in the mobile terminal 1 and mobile communication network server 3, and the database synchronization processing is thereby performed (ST29). In addition, the specific processing of synchronization database is the same as described above.

Meanwhile, when updating timing is not automatic synchronization, the determining section 305 sends a synchronization start notification to the mobile terminal 1 from the communication section 301 based on the table of the user DB 307 as shown in FIG.5 (ST30). Upon receiving the synchronization start notification, the application control sections 106 of the mobile terminal 1 starts the application for database synchronization (ST27). In the mobile communication network server 3, the control section 302 outputs a signal indicative of automatic synchronization being not set to the application control section 308. The application control section 308 starts the application for database synchronization according to the control signal (ST28). Thus, the application for database synchronization is started in the mobile terminal 1 and mobile communication network server 3, and the database synchronization processing is thereby performed (ST29). In addition, the specific processing of synchronization database is the same as described above.

The present invention is not limited to the above-mentioned embodiment, and is capable of being carried into practice with various modifications thereof. For example, in the above-mentioned embodiment, the aspect is described that in the sequence as shown in FIG.8, the mobile terminal 1 transmits a confirmation signal to the mobile communication network server 3 after receiving the synchronization start notification. However, in the invention, the mobile terminal 1 may shift to the database synchronization processing without transmitting the confirmation signal to the mobile communication network server 3 after receiving the synchronization start notification. In this case, in the mobile terminal 1, when the synchronization start notification is received, the control section 103 transmits a control signal indicative of the reception to the application control section 106, and according to the control signal, the application control section 106 starts the application. Further, in the above-mentioned embodiment, the aspect is described that database synchronization is performed at regular time intervals in the case of automatic synchronization. However, in the invention, timing of automatic synchronization may be set at traffic off-peak hours such as nighttime or the like to reduce traffic. Moreover, the invention is capable of being carried into practice with various modifications thereof as appropriate without departing from the scope of the invention.

The database synchronization system of the invention is a database synchronization system in which synchronization of an information element is performed between a server and a user terminal, where the server has judging means for judging the degree of importance of an information element targeted for synchronization or determining means for determining timing of updating an information element, and notifying means for giving a notification to the user terminal corresponding to a judgment result of the judging means, or determination of the determining means, and it is thereby possible to perform database synchronization between the terminal apparatus and server apparatus while reducing user's operation load.

### Industrial Applicability

The database synchronization system and database synchronization method according to the invention are applicable to, for example, a system in which a terminal apparatus and server apparatus are connected via a network.

## Claims

1. A database synchronization system in which synchronization of an information element is performed between a server and a user terminal,
wherein the server has a judging section that judges the degree of importance of an information element targeted for synchronization, and a notifying section that gives a synchronization start notification to the user terminal corresponding to a judgment result of the judging section.

2. The database synchronization system according to claim 1, wherein the notifying section gives the synchronization start notification only in a case that the degree of importance of the information element is relatively high.

3. A database synchronization system in which synchronization of an information element is performed between a server and a user terminal,
wherein the server has a determining section that determines timing of updating an information element, and a notifying section that gives a synchronization start notification to the user terminal corresponding to a determination of the determining section.

4. The database synchronization system according to claim 1, wherein the server has a setting section that makes a setting for automatically performing the synchronization in response to a request from the terminal.

5. The database synchronization system according to claim 1, wherein the user terminal performs different representation corresponding to the synchronization start notification.

6. The database synchronization system according to claim 1, wherein the server and the user terminal have an application for database synchronization.

7. A database synchronization method in which synchronization of an information element is performed between a server and a user terminal, comprising in the server:
a judging step of judging the degree of importance of an information element targeted for synchronization;
a notifying step of giving a synchronization start notification to the user terminal corresponding to a judgment result in the judging step; and
a synchronizing step of synchronizing the information element between the server and the user terminal after the synchronization start notification.

8. The database synchronization method according to claim 7, wherein in the notifying step, the synchronization start notification is given only in a case that the degree of importance of the information element is relatively high.

9. A database synchronization method in which synchronization of an information element is performed between a server and a user terminal, comprising in the server:
a determining step of determining timing of updating an information element;
a notifying step of giving a synchronization start notification to the user terminal corresponding to a determination in the determining step; and
a synchronizing step of synchronizing the information element between the server and the user terminal after the synchronization start notification.

10. The database synchronization method according to claim 9, further comprising:
a transmitting step of transmitting, in the user terminal, a confirmation signal of database synchronization to the server after receiving the synchronization start notification.

11. The database synchronization method according to claim 9, further comprising:
a setting step of making, in the server, a setting for automatically performing the synchronization in response to a request from the terminal.

12. The database synchronization method according to claim 7, wherein the user terminal performs different representation corresponding to the synchronization start notification.
